# EUROPEAN PATENT APPLICATION

(11) **EP 4 611 387 A1**
(43) Date of publication of application: **03.09.2025**
(21) Application number: 24203243.1
(22) Date of filing: 27.09.2024
(51) Int. Cl.: H04Q 1/06

(54) **CABLE ORGANIZING MECHANISM, CABLE ARRANGING MECHANISM, CONNECTING PLATE FOR CABLE DISTRIBUTION AND CABLE DISTRIBUTION RACK**

(30) Priority: 28.02.2024 CN 202410221782
(71) Applicant: Capatronics Electronics (Kunshan) Co., Ltd., Suzhou, Jiangsu 215300 (CN)
(72) Inventor: Wang, Chuanbao, Shou County, Anhui Province, 232200 (CN); Wang, Zhiwei, Kunshan City, Jiangsu Province, 215332 (CN)
(74) Representative: Cleanthous, Marinos

(57) **Abstract**

The present invention discloses a cable organizing mechanism, including: a first plate body and a second plate body. When the second plate body is mutually clamped with the first plate body, an opening allowing a joint of a cable to pass through is closed to form at least one a pass-through hole configured to allow the cable to pass through. The present invention further includes a cable arranging mechanism, including an extending plate connected with at least one of the first plate body or the second plate body and an auxiliary plate mutually clamped with the extending plate. When the extending plate is clamped with the auxiliary plate, a first clamping notch and a second clamping notch constitute a limiting hole allowing a cable to pass through. The present invention can solve the problem that after cables between a cabinet and a switch are organized in order, U-shaped ends of the cables are twisted and displaced due to their own characteristics, a cable organizing effect is unfavorable, and the cables cannot be completely spaced apart, and quality of project construction is affected.

## Description

### CROSS-REFERENC TO RELATED APPLICATIONS

The present application claims priority to the patent application for invention No. 202211729428.0, filed on December 30, 2022 and entitled "CABLE ORGANIZING MECHANISM, CONNECTING PLATE FOR CABLE DISTRIBUTION AND CABLE DISTRIBUTION RACK", an applicant of which is Capatronics Electronics (Kunshan) Co., Ltd.

### TECHNICAL FIELD

The present invention relates to the field of network wiring devices, in particular to a cable organizing mechanism, a cable arranging mechanism, a connecting plate for cable distribution and a cable distribution rack.

### BACKGROUND

The network is indispensable to people in today's production and life. For facilitating unified organizing for network communication devices and connection with optical cables, a cabinet is needed in most cases, a plurality of optical cables are uniformly connected with a switch respectively in the cabinet, during this process, an end of an adapter-connection cable (or jumper wire) needs to be connected with the switch, and another end of the adapter-connection cable (or jumper wire) is connected with a network interface of a cable distribution mechanism.

Since there are numerous network cables in the cabinet, a cable distribution rack usually has various specifications such as 12 ports and 24 ports, so 12 or 24 jumper wires need to be connected to one cable distribution rack in general, as a result, for facilitating organizing of the cables, a cable organizing rack usually need to be arranged independently at present so as to be used in cooperation with the cable distribution rack, and thus the cables can be conveniently arranged.

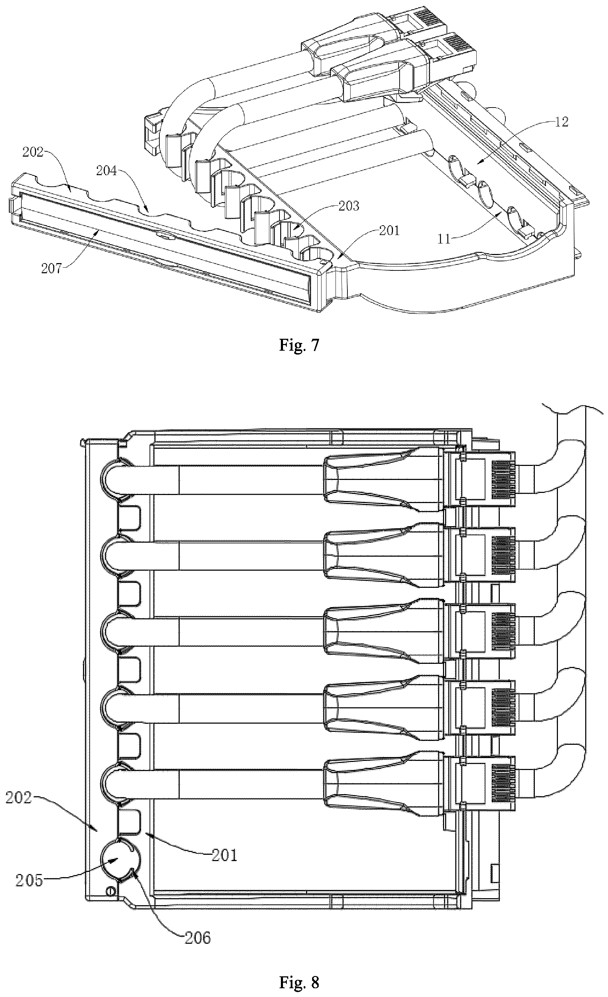

However, an existing cable organizing rack usually occupies a large space. Generally speaking, the cable organizing rack needs to occupy a height of 1 U and also needs to occupy a large space in a width direction and length direction. At present, for example, a cable organizing structure disclosed in a Chinese patent for invention with a publication number 115951461A can organize the cables, however, referring to Fig. 8 in the patent, when the cables are bent to be a U-shaped structure, the cables cannot be arranged in a structure shown in the figure due to their own characteristics, U-shaped ends of the cables may be twisted and displaced, consequently, an cable organizing effect is unfavorable, quality of project construction is affected, and during trouble shooting, it still needs to take a large amount of time to position the cables; a cable organizing support may still inevitably increase occupying space of the cable organizing mechanism; and besides, positions of the cables cannot be fixed completely, so the cables are prone to shifting.

### SUMMARY

The present invention is intended to solve the above technical problem, namely, the problem that after cables between a cabinet and a switch are organized in order, U-shaped ends of the cables are twisted and displaced due to their own characteristics, a cable organizing effect is unfavorable, and quality of project construction is affected.

In a first aspect, the present invention provides a cable organizing mechanism, including: a first plate body, wherein an opening allowing a joint of a cable to pass through is formed in the first plate body; and a second plate body, wherein at least a part of region of the second plate body can be mutually clamped with the first plate body, when the second plate body is mutually clamped with the first plate body, the opening allowing the joint of the cable to pass through is closed to form at least one a pass-through hole configured to allow the cable to pass through, and when the second plate body is not clamped with the first plate body, the opening allowing the joint of the cable to pass through is in an open state.

The whole cable organizing mechanism of the present invention occupies a very small space, so when the cable organizing mechanism of the present invention is arranged on another mechanism (such as a cable distribution rack), an original occupying space of the cable distribution rack does not increase, and a cable organizing rack does not need to be arranged independently, so that use and mounting cost of the cable organizing rack is reduced, an occupying size of the cable organizing mechanism is effectively reduced, cost for cable organizing is reduced, and a utilization ratio of a limited space of the cabinet increases.

In a preferred technical solution of the above cable organizing mechanism, at least one first clamping joint capable of being clamped with the first plate body is arranged on the second plate body, and the first clamping joint is provided with a second clamping groove capable of being mutually clamped with the first plate body. Thus, under cooperation of the first clamping joint and the second clamping groove, the second plate body is conveniently clamped with the first plate body.

In a preferred technical solution of the above cable organizing mechanism, an adjusting groove is formed in a side of the first clamping joint away from the second plate body, and the first clamping joint can move in the adjusting groove towards or away from the first plate body.

In a preferred technical solution of the above cable organizing mechanism, a clamping portion configured to be connected with a third mechanism is further arranged on at least one of the first plate body or the second plate body.

In a preferred technical solution of the above cable organizing mechanism, the clamping portion includes:
at least one second clamping protrusion, wherein a third clamping groove matching the second clamping protrusion is formed in the third mechanism; and
at least one buckle, configured to mutually buckle a part of region of the third mechanism. Thus, when the cable organizing mechanism needs to be connected with the third mechanism, the second clamping protrusion is clamped with the third clamping groove, and by buckling the third mechanism with the buckle, quick connection of the cable organizing mechanism and the third mechanism may be implemented.

In a preferred technical solution of the above cable organizing mechanism, the cable organizing mechanism further includes an extending plate connected with at least one of the first plate body or the second plate body and an auxiliary plate mutually clamped with the extending plate, wherein the extending plate and the auxiliary plate are each provided with at least one group of a first clamping notch and a second clamping notch corresponding to each other so that when the extending plate is clamped with the auxiliary plate, the first clamping notch and the second clamping notch constitute a limiting hole allowing the cable to pass through; or when the extending plate is not clamped with the auxiliary plate, the first clamping notch and the second clamping notch are opened.

In the present invention, the cables are organized through the pass-through hole in the first plate body and the second plate body, and in cooperation with the limiting hole in the extending plate and the auxiliary plate, the cables of a U-shaped structure are effectively fixed, so the cables are spaced apart in order.

In a preferred technical solution of the above cable organizing mechanism, at least one adjusting piece is arranged in the limiting hole, an adjusting gap is formed between the adjusting piece and an internal side wall of the limiting hole, and the adjusting piece is located on a side of the limiting hole close to the extending plate or a side of the limiting hole close to the auxiliary plate. The adjusting piece may be an elastic piece of an arc-shaped structure, so that the adjusting piece makes an external surface of the cable abut against an inner wall of the limiting hole when the cable is located in the limiting hole. Thus, the cable can be limited into the limiting hole under an action of the limiting hole. When a position of the cable needs to be adjusted, a space is provided for movement of the cable, and the position of the cable is conveniently adjusted.

In a preferred technical solution of the above cable organizing mechanism, the extending plate and the first plate body are integrally formed; or the extending plate and the first plate body are split-assembled.

In a preferred technical solution of the above cable organizing mechanism, the extending plate extends on a side of the first plate body in a direction away from the first plate body so as to form an extending region. The extending region causes a certain distance from a portion, fixed by the limiting hole, of the cable to a cable port, so that a cable body is convenient to turn and fix.

In a preferred technical solution of the above cable organizing mechanism, the cable organizing mechanism further includes a label area configured to identify a hole number of the pass-through hole or the limiting hole and arranged on a surface of a side of the auxiliary plate away from the extending plate. The label area is arranged on the auxiliary plate, so the hole number is convenient to identify, a structure space of the auxiliary plate is fully utilized, and thus a whole structure of the cable organizing mechanism is compact.

In a second aspect, the present invention further provides a cable arranging mechanism, including an extending plate and an auxiliary plate capable of being clamped with the extending plate, wherein the extending plate and the auxiliary plate are each provided with at least one group of a first clamping notch and a second clamping notch corresponding to each other so that when the extending plate is clamped with the auxiliary plate, the first clamping notch and the second clamping notch constitute a limiting hole allowing a cable to pass through; or when the extending plate is not clamped with the auxiliary plate, the first clamping notch and the second clamping notch are opened.

In a preferred technical solution of the above cable arranging mechanism, at least one adjusting piece is arranged in the limiting hole, an adjusting gap is formed between the adjusting piece and an internal side wall of the limiting hole, and the adjusting piece is located on a side of the limiting hole close to the extending plate or a side of the limiting hole close to the auxiliary plate.

In a preferred technical solution of the above cable arranging mechanism, the cable arranging mechanism further includes a label area configured to identify a hole number of the limiting hole and arranged on a surface of a side of the auxiliary plate away from the extending plate.

In a third aspect, the present invention provides a connecting plate for cable distribution, including a main plate body and further including the cable organizing mechanism and the cable arranging mechanism, wherein at least one network wiring port configured to plug in a network cable is arranged in the main plate body, and the connecting plate has a height ranging from 1 U to 2 U.

In a preferred technical solution of the connecting plate for cable distribution, the connecting plate has a height of 1 U, and the cable organizing mechanism occupies a height not exceeding 0.5 U.

In a fourth aspect, the present invention provides a cable distribution rack, including the connecting plate for cable distribution and further including a rack body connected with the connecting plate. According to the cable distribution rack of the present invention, cables are organized through the pass-through hole in the first plate body and the second plate body, and in cooperation with the limiting hole in the extending plate and the auxiliary plate, the cables of a U-shaped structure are effectively fixed, so the cables are spaced apart in order; the cables are arranged in order and are not prone to shifting; and meanwhile, by using the cable distribution rack of the present invention, the cable organizing rack does not need to be arranged independently, so the occupied space is greatly saved, use cost of the cable organizing rack is reduced, and a utilization ratio of a limited space of the cabinet increases.

Further, the cable distribution rack further includes a cover detachably connected with the rack body, and at least a part of a cable may be contained in a cavity formed by the cover and the rack body.

### BRIEF DESCRIPTION OF THE DRAWINGS

Fig. 1 is a schematic three-dimensional structural diagram when a second plate body is clamped with a first plate body according to Embodiment 1 of the present invention.
Fig. 2 is a schematic three-dimensional structural diagram of a first plate body according to Embodiment 1 of the present invention.
Fig. 3 is a schematic three-dimensional structural diagram of a second plate body according to Embodiment 1 of the present invention.
Fig. 4a is a schematic diagram of an arrangement position of a fourth clamping groove according to Embodiment 1 of the present invention.
Fig. 4b is a schematic diagram of another arrangement position of a fourth clamping groove according to Embodiment 1 of the present invention.
Fig. 5a is a schematic three-dimensional structural diagram of a connecting plate for cable distribution according to Embodiment 3 of the present invention.
Fig. 5b is a schematic diagram of a use scene of a connecting plate for cable distribution according to Embodiment 3 of the present invention.
Fig. 5c is a schematic diagram of another use scene of a connecting plate for cable distribution according to Embodiment 3 of the present invention.
Fig. 6 is a first schematic diagram after connection of an extending plate and an auxiliary plate with a first plate body and a second plate body in the present invention.
Fig. 7 is a second schematic diagram after connection of an extending plate and an auxiliary plate with a first plate body and a second plate body in the present invention.
Fig. 8 is a third schematic diagram after connection of an extending plate and an auxiliary plate with a first plate body and a second plate body in the present invention.
Fig. 9 is a schematic diagram when an auxiliary plate and an extending plate are not buckled and a first plate body and a second plate body are not buckled in the present invention.
Fig. 10 is a first schematic structural diagram without arrangement of a cover according to Embodiment 4 of the present invention.
Fig. 11 is a second schematic structural diagram without arrangement of a cover according to Embodiment 4 of the present invention.
Fig. 12 is a schematic partial diagram without arrangement of a cover according to Embodiment 4 of the present invention.

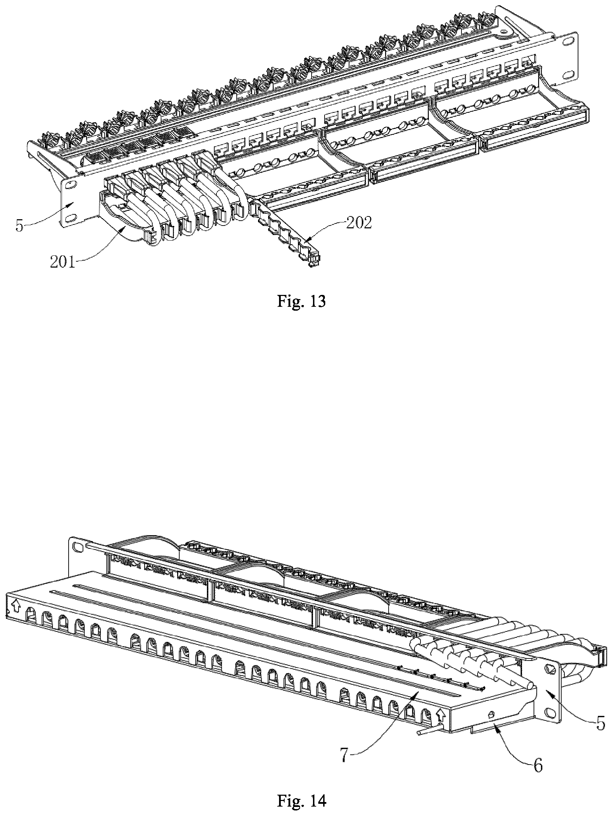

Fig. 13 is a schematic diagram when an auxiliary plate is opened without arrangement of a cover according to Embodiment 4 of the present invention.
Fig. 14 is a first schematic structural diagram with arrangement of a cover according to Embodiment 4 of the present invention.

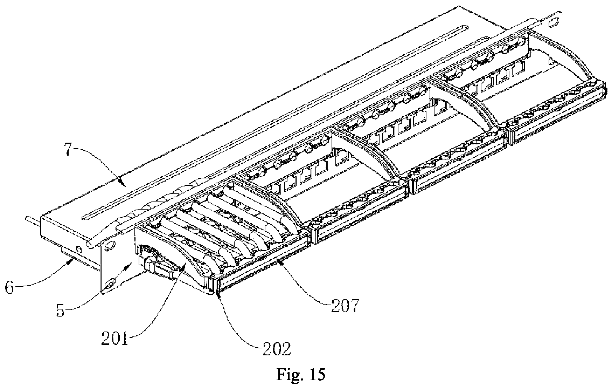

Fig. 15 is a second schematic structural diagram with arrangement of a cover according to Embodiment 4 of the present invention.

In the accompanying drawings:
11, first plate body; 111, opening; 112, first arc-shaped groove; 12, second plate body; 121, second arc-shaped groove;
123, adjusting groove; 13, pass-through hole; 14, first clamping joint; 141, second clamping groove; 142, poking piece; 143; blocking piece;
201, extending plate; 202, auxiliary plate; 203, first clamping notch; 204, second clamping notch; 205, limiting hole; 206, adjusting piece; 207, label area;
31, second clamping protrusion; 32, buckle; 4, third clamping groove;
5, main plate body; 51, network wiring port; 52, first extension plate; 521, clamping position; 53, second extension plate; 54, bracket; 6, rack body; 61, cable carrier; 62, cable clamping seat; 63, clip; 7, cover;
81, network module; 82, PCB; 821, connector; and 9, fourth clamping groove.

### DETAILED DESCRIPTION

Preferred implementations of the present invention are described below with reference to accompanying drawings. Those skilled in the art should understand that these implementations are merely for explaining the technical principle of the present invention but not for limiting the protection scope of the present invention.

Term explanation: "1 U" herein refers to an international standard height of products such as a cable distribution rack and a cable organizing rack, which is usually 44 millimeters.

### Embodiment 1:

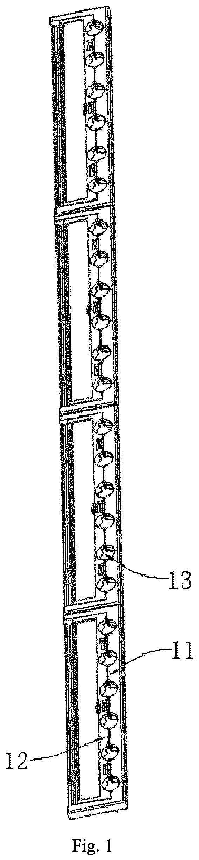

As shown in Fig. 1, this embodiment is a cable organizing mechanism, including a first plate body 11 and a second plate body 12 which can be clamped with each other.

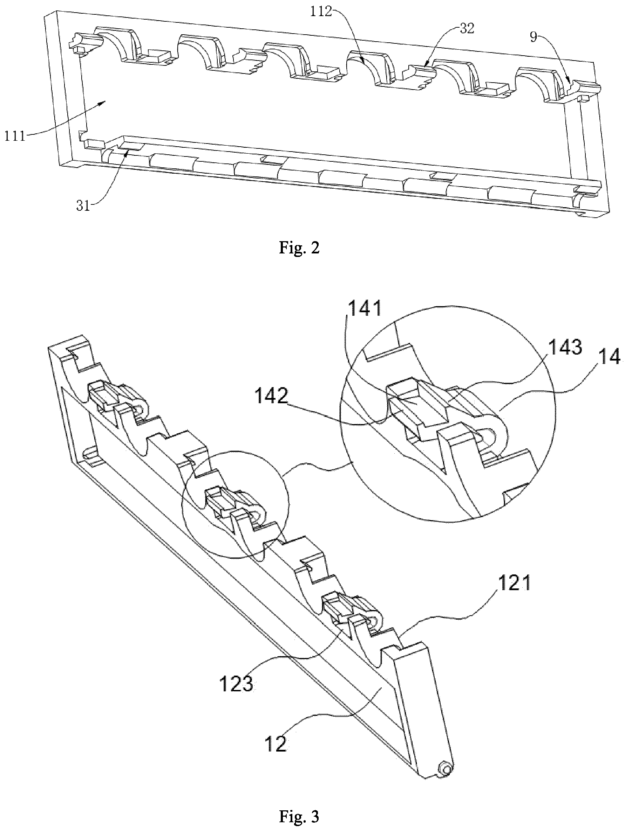

As shown in Fig. 2, an opening 111 allowing a joint of a cable to pass through is formed in the first plate body 11, so that when the second plate body 12 is separated from the first plate body 11, the cable and its joint can conveniently pass through the opening 111, and thus cable organizing is facilitated.

When the second plate body 12 is mutually clamped with the first plate body 11, at least one pass-through hole 13 configured to allow the cable to pass is formed.

As shown in Fig. 3, in some implementations, a second arc-shaped groove 121 is formed in a side of the second plate 12 close to the first plate body 11, a first arc-shaped groove 112 is formed in a side of the first plate body 11 close to the second plate body 12, so that when the second plate body 12 is clamped with the first plate body 11, the first arc-shaped groove 112 and the second arc-shaped groove 121 just form the pass-through hole 13, and thus a cable body portion of the cable may be limited into the pass-through hole 13. In some implementations, an internal diameter of the pass-through hole 13 is less than an external diameter of the cable joint, so that when the second plate body 12 is mutually clamped with the first plate body 11, the cable joint does not fall off or withdraw from the pass-through hole 13.

According to the cable organizing mechanism of the present invention, by arranging the second plate body 12 capable of being separated from and clamped with the first plate body 11, when a cable needs to pass, the second plate body 12 is separated from the first plate body 11, and after the cable body passes, the second plate body 12 is mutually clamped with the first plate body 11, so that an operation of cable passing may be quickly implemented. The whole cable organizing mechanism of the present invention occupies a very small space, so when the cable organizing mechanism of the present invention is arranged on another mechanism (such as a cable distribution rack), an original occupying space of the cable distribution rack does not increase, and a cable organizing rack does not need to be arranged independently, so that use and mounting cost of the cable organizing rack is reduced, an occupying size of the cable organizing mechanism may be effectively reduced, production cost for a workpiece is reduced, a utilization ratio of a limited space of the cabinet is increases, and market occupancy of the present invention is improved.

In some implementations, the first plate body 11 is in pivot joint with the second plate body 12, namely, a first end of the second plate body 12 is rotationally mounted on the first plate body 11, and a second end of the second plate body 12 is buckled onto the first plate body 11. By means of this arrangement, quick clamping of the first plate body 11 and the second plate body 12 may be implemented. It needs to be noted that a connecting mode of the first plate body 11 and the second plate body 12 is not limited.

According to the cable organizing mechanism of the present invention, at least one first clamping joint 14 capable of being clamped with the first plate body 11 is arranged on the second plate body 12, and the first clamping joint 14 is provided with a second clamping groove 141 capable of being mutually clamped with the first plate body 11.

The first clamping joint 14 of the present invention is a movable clamping joint, the first clamping joint 14 includes a poking piece 142 and a blocking piece 143, the poking piece 142 and the blocking piece 143 form the second clamping groove 141, and when the second plate body 12 is mutually clamped with the first plate body 11, the poking piece 142 and the blocking piece 143 are located on two sides of the first plate body 11 respectively. An adjusting groove 123 is formed in a side of the first clamping joint 14 of the second plate body 12 away from the first plate body 11, and the first clamping joint 14 can move in the adjusting groove 123 towards or away from the first plate body 11. Thus, when the second plate body 12 needs to be clamped with the first plate body 11, the first plate body 11 is clamped in the second clamping groove 141. When the second plate body 12 needs to be separated from the first plate body 11, as the adjusting groove 123 provides an adjusting space for movement of the poking piece 142, by pressing the poking piece 142 at the moment, the second plate body 12 can be separated from the first plate body 11, thus the opening 111 is in an open state, and then the cable may smoothly pass through the opening 111.

A clamping portion configured to be connected with a third mechanism is further arranged on the first plate body 11 and/or the second plate body 12. The "third mechanism" mentioned herein refers to another mechanism except the cable organizing mechanism. In some implementations, it may be a cable distribution rack, or a cable organizing rack or a network cable distribution cabinet, etc.

As shown in Fig. 2, in some implementations, the clamping portion includes: at least one second clamping protrusion 31 and at least one buckle 32.

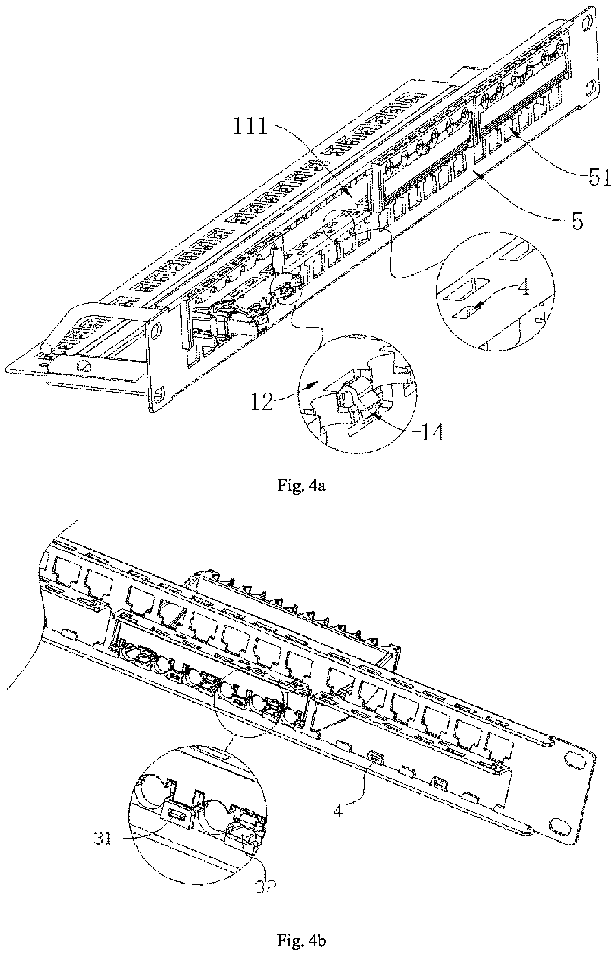

In some implementations, the second clamping protrusion 31 is arranged close to a lower edge of the first plate body 11, the third mechanism is provided with a third clamping groove 14 (referring to Fig. 4a, which is a schematic diagram when the first plate body 11 and the second plate body 12 are removed at a second opening 111 counted from a left end in the figure), and the buckle 32 is configured to be mutually clamped with a part of a region of the third mechanism. An external end portion of the buckle 32 has a slope surface, a height of the slope surface is gradually reduced along a side away from a main body of the cable organizing mechanism, thus when the cable organizing mechanism needs to be mutually clamped with the third mechanism, the cable organizing mechanism is pushed towards the third mechanism, and the buckle 32 may be quickly clamped with the third mechanism under guiding of the slope surface. In some implementations, a fourth clamping groove 9 is formed between the buckle 32 and a main plate body of the first plate body 11, so that mutual clamping with the third mechanism may be implemented through the fourth clamping groove 9. A groove bottom of the fourth clamping groove 9 may be in a planar shape or step shape, so that matching third mechanisms of more specifications and sizes may be achieved.

In other possible implementations, the third clamping groove 4 may also be in a form in Fig. 4b, correspondingly, the second clamping protrusion 31 is arranged in any one of the first plate body 11 or the second plate body 12, the second clamping protrusion can be clamped into the third clamping groove 4, and thus the first plate body 11 and/or the second plate body 12 may be conveniently clamped with the third clamping groove 4 in the third mechanism. Meanwhile, the buckle is arranged on the first plate body 11 and/or the second plate body 12, and a corresponding structure matching the buckle is arranged on the third mechanism. Thus, the first plate body 11 and/or the second plate body 12 may be stably clamped with the third mechanism. In some implementations, the third clamping groove 4 and the buckle may be arranged alternately.

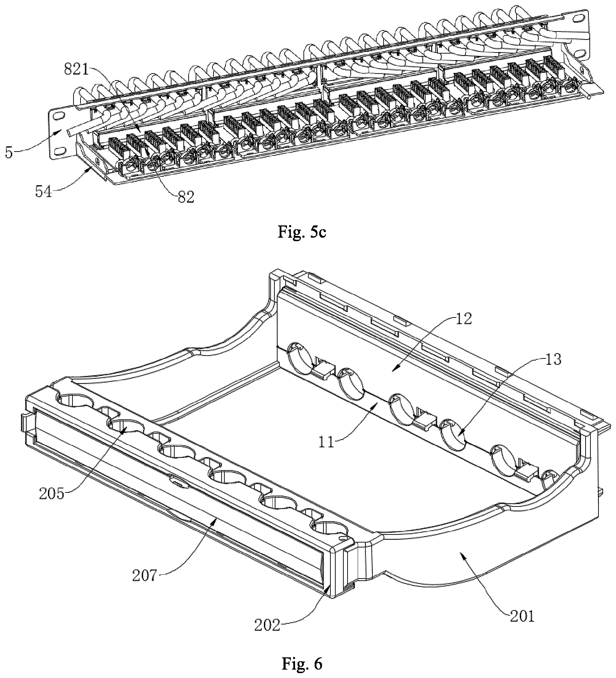

Referring to Fig. 6 to Fig. 9, the cable organizing mechanism of the present invention further includes an extending plate 201 mounted on the first plate body 11 and an auxiliary plate 202 mutually clamped with the extending plate 201, the extending plate 201 and the first plate body 11 are integrally formed, or the extending plate 201 and the first plate body 11 may be connected in a clamped mode, a riveting mode, a bolted connection and other split combined connection modes, a frame structure is defined by the extending plate 201 and the first plate body 11, the extending plate 201 is approximately in an inverted "n" shape, the first plate body 11 is approximately in a linear shape, the auxiliary plate 202 is clamped to a side of the extending plate 201 away from the first plate body 11, a first clamping notch 203 and a second clamping notch 204 are formed in the side of the extending plate 201 away from the first plate body 11 and the auxiliary plate 202 respectively, and when the auxiliary plate 202 is clamped to the extending plate 201, the first clamping notch 203 and the second clamping notch 204 are combined to form a limiting hole 205 allowing the cable to pass through. In some implementations, a straight line where a central axis of the limiting hole 205 is located is perpendicular to a straight line where the pass-through hole 13 is located, and taking Fig. 6 as an example, if a central axis of the pass-through hole 13 is in a horizontal direction, the central axis of the limiting hole 205 is in a direction perpendicular to a horizontal plane. In some implementations, the straight line where the central axis of the limiting hole 205 is located is not perpendicular to (such as horizontal or in a certain included angle) the straight line where the pass-through hole 13 is located as long as it is ensured that the cable can be fixed at the limiting hole 205 and ensured that bending angles of cables passing through all limiting holes 205 stay similar, so that an effect of arranging the cables in order is achieved under an action of the limiting holes 205.

In some implementations, an extending region exists between the extending plate 201 and the first plate body 11, the extending region causes a certain distance from a portion, fixed by the limiting hole 205, of the cable to a cable port, so that a cable body is convenient to turn and fix, and the cable is of the U-shaped structure after passing through the pass-through hole 13 and the limiting hole 205. In the present invention, the cables are organized through the pass-through hole 13 in the first plate body 11 and the second plate body 12, in cooperation with the limiting hole 205 in the extending plate 201 and the auxiliary plate 202, the cables of the U-shaped structure are effectively fixed, and the cables are spaced apart in order. At least one limiting hole 205 is formed in the extending plate 201 and the auxiliary plate 202, the limiting holes 205 are in one-to-one correspondence with the pass-through holes 13 formed in the first plate body 11 and the second plate body 12, and when the extending plate 12 is not clamped with the auxiliary plate 202, the first clamping notch 203 and the second clamping notch 204 are in an open state, and in this case, the cables located in the first clamping notch may be adjusted.

Referring to Fig. 7, in some implementations, an end of the auxiliary plate 202 is rotationally mounted at an end portion of the extending plate 201 away from the first plate body 11, and the other end of the auxiliary plate 202 is clamped to the extending plate 201. When the first clamping notch 203 and the second clamping notch 204 need to be separated so as to adjust and mount the cables, by opening the end of the auxiliary plate 202 clamped to the extending plate 201, convenience of mounting and adjusting the cables can be improved, the auxiliary plate 202 is prevented from being taken down onto the extending plate 201, and a risk of losing the auxiliary plate 202 is reduced. Besides, a space occupancy rate of the auxiliary plate 202 and the extending plate 201 of the present invention is small, a structure is complete, and production cost is reduced. In other possible implementations, two ends of the auxiliary plate 202 are clamped to the extending plate 201. A mode in which the auxiliary plate 202 is clamped to the extending plate 201 may be a buckle and clamping groove connection mode, and a specific clamping structure is not limited.

Referring to Fig. 8, in some implementations, an adjusting piece 206 is formed in the limiting hole 205, an adjusting gap is formed between the adjusting piece 206 and an internal side wall of the limiting hole 205, and the cable may be limited into the limiting hole 205 under an action of the limiting hole 205. When a position of the cable needs to be adjusted, the adjusting gap is formed between the adjusting piece 206 and the internal side wall of the limiting hole 205, so that the adjusting piece 206 moves towards the internal side wall of the limiting hole 205, and thus a space is provided for movement of the cable and the position of the cable is conveniently adjusted. In some implementations, there are two adjusting pieces 206, merely one ends of the adjusting pieces 206 make contact with an internal wall of the limiting hole 205, so that when the cable makes contact with the adjusting pieces 206, the adjusting pieces 206 can make the cable abut against the internal wall of the limiting hole 205, and the effect of fixing the cable is further improved; or adjusting gaps exist between the adjusting pieces 206 and the limiting hole 205, so that after the cable is fixed by the limiting hole 205, a length or position of the cable can still be finely adjusted, the number of times for opening the auxiliary plate 202 to adjust the cable is reduced, and a use effect of the cable is improved.

In some implementations, each adjusting piece 206 is in an arc shape, so as to conveniently match a shape of the cable. A cross section of each adjusting piece 206 may be semi-circular or arc-shaped.

In some implementations, each adjusting piece 206 may also be an elastic piece.

In some implementations, the adjusting piece 206 may be located in the first clamping notch 203 of the extending plate 201 or may be located in the second clamping notch 204 of the auxiliary plate 202, or one adjusting piece 206 is located in the first clamping notch 203, and the other adjusting piece 206 is located in the second clamping notch 204, which is not limited specifically. When the adjusting pieces 206 are located in the first clamping notch 203, the adjusting pieces 206 and the extending plate 201 may be integrally formed, and when the adjusting pieces 206 are located in the second clamping notch 204, the adjusting pieces 206 and the auxiliary plate 202 may be integrally formed.

In some implementations, a length (namely, a depth of the limiting hole 205) of each adjusting piece 206 in an axial direction of the limiting hole 205 inside the limiting hole 205 is not limited, for example, may be 1/2, 1/3, 1/4, 1/5 or the like of the depth of the limiting hole 205.

In some implementations, a position of each adjusting piece 206 is arranged in a position close to an opening of the limiting hole 205, so as to conveniently form the adjusting piece 206 by machining.

Referring to Fig. 6 and Fig. 7, the cable organizing mechanism of the present invention further includes a label area 207 configured to identify hole numbers of the pass-through holes 13 and the limiting holes 205 which are in one-to-one correspondence.

In some implementations, the label area 207 is arranged on a surface of a side of the auxiliary plate 202 away from the extending plate 201. In some implementations, the label area 207 includes a turnable transparent cover which can be mutually clamped with the auxiliary plate 202, and after the cover is clamped with the auxiliary plate 202, a gap for placing a piece of label paper is formed between the cover and the auxiliary plate 202.

### Embodiment 2:

It needs to be noted that Embodiment 2 adopts the same description manner and label number as features of the extending plate 201, the auxiliary plate 202, the first clamping notch 203, the second clamping notch 204, the limiting hole 205, the adjusting piece 206, the label area 207, etc. in Embodiment 1. Embodiment 2 is different from Embodiment 1 only in that Embodiment 2 does not include the first plate body 11 and the second plate body 12.

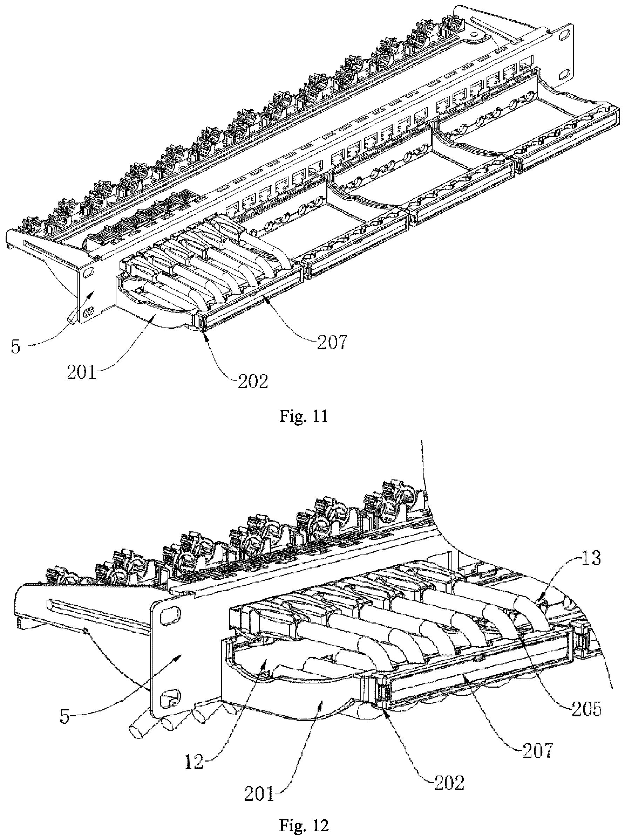

Referring to Fig. 6 to Fig. 12, a cable arranging mechanism of the present invention further includes an extending plate 201 and an auxiliary plate 202 mutually clamped with the extending plate 201, the extending plate 201 is approximately in an inverted "n" shape, and the auxiliary plate 202 is clamped to a middle side edge of the extending plate 201. The middle side edge of the extending plate 201 and the auxiliary plate 202 are each provided with a first clamping notch 203 and a second clamping notch 204. When the auxiliary plate 202 is clamped to the extending plate 201, the first clamping notch 203 and the second clamping notch 204 constitute a limiting hole 205 allowing a cable to pass through in a vertical direction, so that the cable passing through the limiting hole 205 can be fixed and limited by the extending plate 201 and the auxiliary plate 202, and thus two ends of the cable can be distributed on the extending plate 201 at a preset bending angle. The whole cable arranging mechanism of the present invention is small in occupying space and good in fixing effect, so that when the cable arranging mechanism of the present invention is arranged on another mechanism (such as a cable distribution rack), the cable arranging mechanism can cooperate with the cable distribution rack to fix a portion of a U-shaped structure of the cable, a phenomenon that each cable is twisted is avoided, and the effect of fixing the cable is improved. In addition, at least one limiting hole 205 is formed in the extending plate 201 and the auxiliary plate 202, and one limiting hole 205 is configured to allow a cable to pass therethrough.

When the extending plate 201 is not clamped with the auxiliary plate 202, the first clamping notch 203 and the second clamping notch 204 are in an open state, in this case, cables in the first clamping notch 203 may be adjusted, and quickly arranging and organizing the cables is implemented.

In some implementations, an end of the auxiliary plate 202 is rotationally mounted at an end of a middle portion of the extending plate 201, and the other end of the auxiliary plate 202 is clamped to the other end of the middle portion of the extending plate 201; and when the first clamping notch 203 and the second clamping notch 204 need to be separated to adjust and mount the cable, by means of this arrangement, convenience of mounting and adjusting the cable can be improved, the auxiliary plate 202 is prevented from being taken down onto the extending plate 201, and the risk of losing the auxiliary plate 202 is reduced. In other possible implementations, two ends of the auxiliary plate 202 are clamped to the extending plate 201. A mode in which the auxiliary plate 202 is clamped to the extending plate 201 may be a buckle and clamping groove connection mode, and a specific clamping structure is not limited.

In some implementations, an adjusting piece 206 is formed in the limiting hole 205; and the adjusting piece 206 may be an elastic piece of an arc-shaped structure or in a plate shape or of a triangular structure, so that when the cable is located in the limiting hole 205, the adjusting piece 206 makes an external surface of the cable abut against an internal wall of the limiting hole 205. In some implementations, there are two adjusting pieces 206, merely one ends of the adjusting pieces 206 make contact with an internal wall of the limiting hole 205, and the adjusting pieces 206 are elastic, so that when the cable makes contact with the adjusting pieces 206, the adjusting pieces 206 can make the cable abut against the internal wall of the limiting hole 205, and the effect of fixing the cable is further improved; or adjusting gaps exist between the adjusting pieces 206 and the limiting hole 205 and the adjusting pieces 206 are elastic, so that after the cable is fixed by the limiting hole 205, a length or position of the cable can still be finely adjusted, the number of times for opening the auxiliary plate 202 to adjust the cable is reduced, and a use effect of the cable is improved.

In some implementations, the adjusting piece 206 may be located in the first clamping notch 203 of the extending plate 201 or may be located in the second clamping notch 204 of the auxiliary plate 202, or one adjusting piece 206 is located in the first clamping notch 203, and the other adjusting piece 206 is located in the second clamping notch 204, which is not limited specifically. When the adjusting pieces 206 are located in the first clamping notch 203, the adjusting pieces 206 and the extending plate 201 may be integrally formed, and when the adjusting pieces 206 are located in the second clamping notch 204, the adjusting pieces 206 and the auxiliary plate 202 may be integrally formed.

In some implementations, a length (namely, a depth of the limiting hole 205) of each adjusting piece 206 inside the limiting hole 205 in an axial direction of the limiting hole 205 is not limited, for example, may be 1/2, 1/3, 1/4, 1/5 or the like of the depth of the limiting hole 205.

In some implementations, a position of each adjusting piece 206 is arranged in a position close to an opening of the limiting hole 205, so as to conveniently form the adjusting piece 206 by machining.

Referring to Fig. 7, the cable arranging mechanism of the present invention further includes a label area 207 configured to identify hole numbers of pass-through holes 13 and the limiting holes 205 which are in one-to-one correspondence.

In some implementations, the label area 207 is arranged on a surface of a side of the auxiliary plate 202 away from the extending plate 201. In some implementations, the label area 207 includes a turnable transparent cover which can be mutually clamped with the auxiliary plate 202, and after the cover is clamped with the auxiliary plate 202, a gap for placing a piece of label paper is formed between the cover and the auxiliary plate 202. The label area 207 of the present invention is located on a side of the cable arranging mechanism away from a rack body of the cable distribution rack and is not arranged on the cable distribution rack but is closer to an external surface of a side of a user, so that the user may conveniently check out identifications.

### Embodiment 3:

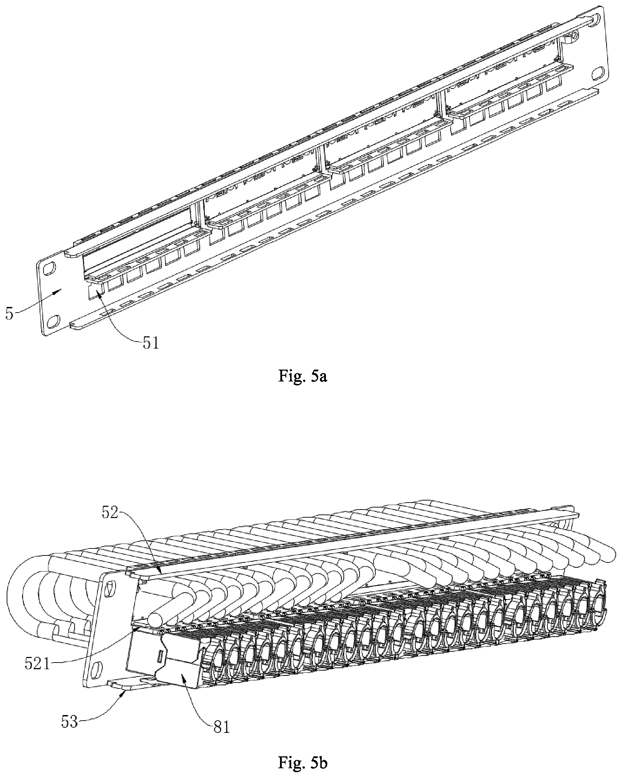

As shown in Fig. 5a, this embodiment is a connecting plate for cable distribution, including a main plate body 5 and further including a cable organizing mechanism in Embodiment 1 and a cable arranging mechanism in Embodiment 2, at least one network wiring port 51 configured to plug in a network cable is arranged in the main plate body 5, and the connecting plate has a height ranging from 1 U to 2 U.

In some implementations, the cable organizing mechanism is arranged along a lower edge of the connecting plate, and the network wiring port 51 is arranged close to an upper edge of the connecting plate (a side of the connecting plate provided with the network wiring port 51 in Fig. 5a is used as "upper"). The cable organizing mechanism is located below the network wiring port 51, pass-through holes 13 of the cable organizing mechanism are arranged respectively in one-to-one correspondence with lower portions of the network wiring ports 51, so that organized cable bodies can be placed in order and convenient to position.

In some implementations, the connecting plate has a height of 1 U, and the cable organizing mechanism has a height not exceeding 0.5 U. During cable distribution, first, a second plate body 12 is turned over and opened from a first plate body 11, in this case, the cable is caused to pass through an opening 111 (with reference to a schematic diagram when the second plate body 12 at a leftmost end is turned over and opened from the first plate body 11 in Fig. 4); and then the second plate body 12 is clamped with the first plate body 11, so that the cables may be organized in order. The connecting plate for cable distribution of the present invention has both the functions of cable distribution and organizing, a whole height still remains within a standard height (1 U) of an existing cable organizing rack, thus, increase of an occupying size due to arrangement of the cable organizing mechanism does not occur, and a space in a network installation cabinet can be effectively saved.

In other possible implementations, the cable organizing mechanism may also be arranged along an upper edge of the connecting plate, and the network wiring port 51 is arranged close to the lower edge of the connecting plate.

In other possible implementations, the connecting plate may also have a height of 2 U, so that a standard size is formed, which is consistent with a height obtained after combination of the cable organizing rack and the cable distribution rack in the prior art, and layout in an existing cable distribution cabinet cannot change.

In other possible implementations, the cable arranging mechanism can replace the above cable organizing mechanism.

In some implementations, as shown in Fig. 5b, a first extension plate 52 and a second extension plate 53 which are perpendicular to the main plate body and extend away from the main plate body 5 are further arranged on the main plate body 5, and a clamping position configured to clamp a network module 81 is formed between the first extension plate 52 and the second extension plate 53. Correspondingly, a clamping position 521 may be further arranged on the first extension plate 52 and the second extension plate 53. Correspondingly, a structure capable of matching the clamping position 521 is arranged on the network module 81, so that a network switching module in a form of the network module 81 is conveniently connected.

In other possible implementations, as shown in Fig. 5c, a network switching module of a PCB 82 may be used to replace the network module 81. The PCB 82 may be arranged on a bracket 54 and the bracket 54 is connected with the main plate body 5. The PCB 82 may also be directly clamped to the main plate body 5 through a connector 821. In some implementations, the whole connector 821 is in a long strip shape, and each PCB 82 may correspond to a plurality of network wiring ports 51.

### Embodiment 4:

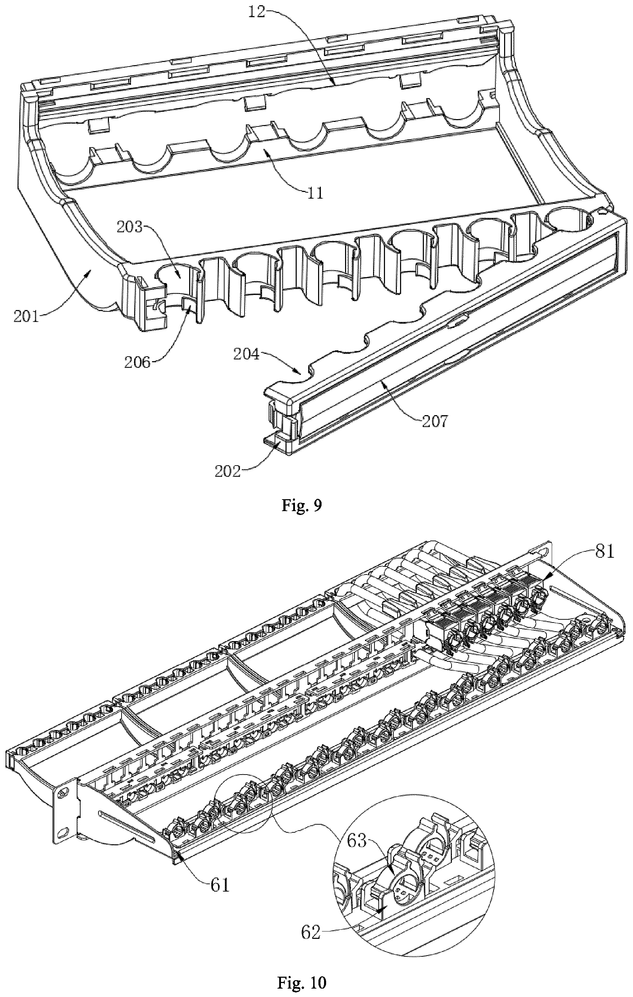

As shown in Fig. 10 to Fig, 15, this embodiment is a cable distribution rack, including a connecting plate for cable distribution in Embodiment 3 and further including a rack body 6 connected with the connecting plate. The rack body 6 may be integrated or split. When the rack body 6 is integrated, whole mounting convenience can be improved.

In some implementations, in the cable distribution rack of the present invention, a cable carrier 61 is further arranged on the rack body 6, a cable clamping seat 62 is arranged on the cable carrier 61 and corresponds to each network wiring port 51 respectively, and a clip 63 is arranged on the cable clamping seat 62. Thus, cables located on the cable carrier 61 can be organized and fixed.

In some implementations, when a side of the rack body 6 away from an extending plate 201 is not covered with a cover 7, the rack body 6 is of a frame-type structure, and by this arrangement, the extending plate 201 integrally formed with a first plate body 11 can be mounted on the connecting plate in a positive direction or a negative direction, and a requirement of different placement directions of cables (jumper wires) is met.

In some implementations, when the side of the rack body 6 away from the extending plate 201 is covered with the cover 7, the rack body 6 is of a plate-shaped structure; and when covered with the cover 7, a cable organizing mechanism is not arranged in a box formed by the cover 7 and the rack body 6. Thus, network wiring modules are located in a cavity, only a cable connected with a network interface is located outside the box, and whole attractiveness is high. A network module 81 shown in Fig. 10 or a PCB 82 shown in Fig. 5c may be arranged in the box formed by the cover 7 and the rack body 6 so as to implement connection with the cable. An electric plug core located inside the network wiring port 51 is arranged on the PCB 82, a terminal base is further arranged on the PCB 82, a cable cutter is inserted into the terminal base, a cable limiting column is arranged above the terminal base, a top of the cable cutter extends into the cable limiting column and is configured to cut a cable in the cable limiting column so as to make contact with a conductor in the cable for implementing data transmission.

Thus, the cable distribution rack of the present invention has an extra function of cable organizing on the basis that an original height 1 U of the cable distribution rack remains unchanged, namely, a cable organizing rack does not need to be arranged independently. An occupied space in a network installation cabinet is greatly saved, and a size or height of the cable distribution rack does not need to increase so as to meet the functions of integrating organizing and distribution at the same time.

A description is made by taking a 48-port switch as an example, when the cable distribution rack has 24 ports, two groups of cable distribution racks need to be provided, and correspondingly, one cable organizing rack is arranged corresponding to each cable distribution rack. In general, the cable organizing rack also has a height of 1 U, namely, a needed height except the switch is 4 U. When 48 cables are connected by using the cable distribution rack of the present invention, an occupied height of 2 U in the cabinet may be saved, and the space inside the cabinet is saved by about 30% to 40%.

The aforementioned implementations are only for explaining the technical concept and the features of the present invention and are intended to make those familiar with this technology understand and implement the contents of the present invention but not to limit the protection scope of the present invention, and equivalent variations or modifications made according to the spirit essence of the present invention are to be covered within the protection scope of the present invention.

## Claims

1. A cable organizing mechanism, **characterized by** comprising:
a first plate body, wherein an opening allowing a joint of a cable to pass through is formed in the first plate body; and
a second plate body, wherein at least a part of region of the second plate body can be mutually clamped with the first plate body, when the second plate body is mutually clamped with the first plate body, the opening allowing the joint of the cable to pass through is closed to form at least one a pass-through hole configured to allow the cable to pass through, and when the second plate body is not clamped with the first plate body, the opening allowing the joint of the cable to pass through is in an open state.

2. The cable organizing mechanism according to claim 1, **characterized in that** at least one first clamping joint capable of being clamped with the first plate body is arranged on the second plate body, and the first clamping joint is provided with a second clamping groove capable of being mutually clamped with the first plate body.

3. The cable organizing mechanism according to claim 2, **characterized in that** an adjusting groove is formed in a side of the first clamping joint away from the second plate body, and the first clamping joint can move in the adjusting groove towards or away from the first plate body.

4. The cable organizing mechanism according to claim 1, **characterized in that** a clamping portion configured to be connected with a third mechanism is further arranged on at least one of the first plate body or the second plate body.

5. The cable organizing mechanism according to claim 4, **characterized in that** the clamping portion comprises:
at least one second clamping protrusion, wherein a third clamping groove matching the second clamping protrusion is formed in the third mechanism; and
at least one buckle, configured to mutually buckle a part of region of the third mechanism.

6. The cable organizing mechanism according to claim 1, **characterized by** further comprising an extending plate connected with at least one of the first plate body or the second plate body and an auxiliary plate mutually clamped with the extending plate, wherein the extending plate and the auxiliary plate are each provided with at least one group of a first clamping notch and a second clamping notch corresponding to each other so that when the extending plate is clamped with the auxiliary plate, the first clamping notch and the second clamping notch constitute a limiting hole allowing the cable to pass through; or when the extending plate is not clamped with the auxiliary plate, the first clamping notch and the second clamping notch are opened.

7. The cable organizing mechanism according to claim 6, **characterized in that** at least one adjusting piece is arranged in the limiting hole, an adjusting gap is formed between the adjusting piece and an internal side wall of the limiting hole, and the adjusting piece is located on a side of the limiting hole close to the extending plate or a side of the limiting hole close to the auxiliary plate.

8. The cable organizing mechanism according to claim 6, **characterized in that** the extending plate and the first plate body are integrally formed; or the extending plate and the first plate body are split-assembled.

9. The cable organizing mechanism according to claim 8, **characterized in that** the extending plate extends on a side of the first plate body in a direction away from the first plate body so as to form an extending region.

10. The cable organizing mechanism according to claim 6, **characterized by** further comprising a label area configured to identify a hole number of a pass-through hole or the limiting hole and arranged on a surface of a side of the auxiliary plate away from the extending plate.

11. A cable arranging mechanism, **characterized by** comprising an extending plate and an auxiliary plate capable of being clamped with the extending plate, wherein the extending plate and the auxiliary plate are each provided with at least one group of a first clamping notch and a second clamping notch corresponding to each other so that when the extending plate is clamped with the auxiliary plate, the first clamping notch and the second clamping notch constitute a limiting hole allowing a cable to pass through; or when the extending plate is not clamped with the auxiliary plate, the first clamping notch and the second clamping notch are opened.

12. The cable arranging mechanism according to claim 11, **characterized in that** at least one adjusting piece is arranged in the limiting hole, an adjusting gap is formed between the adjusting piece and an internal side wall of the limiting hole, and the adjusting piece is located on a side of the limiting hole close to the extending plate or a side of the limiting hole close to the auxiliary plate.

13. The cable arranging mechanism according to claim 11, **characterized by** further comprising a label area configured to identify a hole number of the limiting hole and arranged on a surface of a side of the auxiliary plate away from the extending plate.

14. A connecting plate for cable distribution, **characterized by** comprising a main plate body and further comprising the cable organizing mechanism according to claim 1 and the cable arranging mechanism according to claim 11, wherein at least one network wiring port configured to plug in a network cable is arranged in the main plate body, and the connecting plate has a height ranging from 1 U to 2 U.

15. The connecting plate for cable distribution according to claim 14, **characterized in that** the connecting plate has a height of 1 U, and the cable organizing mechanism occupies a height not exceeding 0.5 U.

16. A cable distribution rack, **characterized by** comprising the connecting plate for cable distribution according to claim 14 and further comprising a rack body connected with the connecting plate.

17. The cable distribution rack according to claim 16, **characterized by** further comprising a cover detachably connected with the rack body, wherein at least a part of a cable may be contained in a cavity formed by the cover and the rack body.
